# EUROPEAN PATENT SPECIFICATION

(11) **EP 1 952 028 B1**
(45) Date of publication and mention of the grant of the patent: **25.11.2009**
(21) Application number: 06790497.9
(22) Date of filing: 11.10.2006
(51) Int. Cl.: F04D 29/04, F04D 15/00, F16C 32/06

(54) **FLUID COMPRESSOR WITH AEROSTATIC BEARING, CONTROL SYSTEM OF A COMPRESSOR WITH AEROSTATIC BEARING AND METHOD OF CONTROLLING A COMPRESSOR WITH AEROSTATIC BEARING**
FLUIDVERDICHTER MIT AEROSTATISCHEM LAGER, STEUERSYSTEM FÜR EINEN VERDICHTER MIT AEROSTATISCHEM LAGER UND VERFAHREN ZUR STEUERUNG EINES VERDICHTERS MIT AEROSTATISCHEM LAGER
COMPRESSEUR DE FLUIDE AVEC PALIER AÉROSTATIQUE, SYSTÈME DE COMMANDE D'UN COMPRESSEUR AVEC PALIER AÉROSTATIQUE ET PROCÉDÉ DE COMMANDE D'UN COMPRESSEUR AVEC PALIER AÉROSTATIQUE

(30) Priority: 11.10.2005 BR PI0504326
(43) Date of publication of application: 06.08.2008
(73) Proprietor: WHIRLPOOL S.A., 04578-000 São Paulo SP (BR)
(72) Inventor: IETKA, Marcos, Francisco, 89217-400 Joinville SC (BR)
(74) Representative: Burt, Matthew Thomas
(86) International application number: PCT/BR2006/000212
(87) International publication number: WO 2007/041818

(56) References cited:
- EP-A- 0 212 091
- EP-A2- 1 418 341
- DE-A1- 3 612 097
- DE-C1- 4 225 642
- FR-A1- 2 592 688

## Description

The present invention relates to a fluid compressor having an aerostatic bearing, to a control system of a fluid compressor having an aerostatic bearing as well as to a method of controlling a compressor, this fluid compressor may include, for instance, centrifugal compressors or linear compressors applicable to cooling systems and to the construction and the respective control system of the pressurization in the bearings of said devices.

### Description of the Prior Art

Centrifugal compressors have long been used in the industry, for instance, in the automotive industry. Its concept is quite simple in relation to the other compressors, e.g., reciprocating, rotary etc. However, their bearing system is highly complex due to high speed operation during the normal functioning mode, which is estimated at a rotation of about 30,000 to 200,000 rpm. Notedly, the use of centrifugal compressors in cooling cycles has been rare, due to the technological difficulties for the bearing system.

Still with regard to the centrifugal compressors, these normally have single or double stage configurations, but they may include multiple stages according to the use of the equipment, the amount of stages being defined by the number of rotors mounted on an shaft with actuation by an electrical motor.

According to the prior art, one of the ways to solve the bearing system problem for shaft floating is the use of electromagnetic bearings that keep the shafts floating in view of obtain a construction which has no friction in the bearings. This solves the problem of friction, but requires a specific electric circuit, and the bearing needs to be provided with energizable coils to form the electromagnetic field.

Other solutions describe the use of aerostatic bearings that are pressurized to float during the operation of the compressor and thus reduce friction and prolong the useful life of the equipment. In these solutions, it is necessary to use, for instance, a pump so that the bearing is pressurized at the moment in which the compressor is turned on (or is at starting mode) to avoid premature wear of the equipment.

One of the solutions found in the art that tries to solve these problems is described in document EP 0 212 091, which refers to a pressurized bearing that is used in turbochargers of internal-combustion engines and which is considered as the closest prior art to the subject matter of claim 1. According to the teachings of this document, a storage reservoir connected between the hot and the cold part of the turbocharger is provided, and this reservoir stores the air pressurized by the turbocharger in order to pressurize the bearing and, thus, avoid its wear during the start and operation of the engine.

One of the deficiencies of this solution is that it requires the assembly of a reservoir and piping, which generates manufacturing and maintenance costs.

### Brief Description and Objectives of the Invention

In order to overcome the problems of the prior art, the objects of the present invention are a compressor, a system and the respective method of control with a bearing system through a previously pressurized reservoir, controllable by a pair of control valves aiming at:
- Achieving a simplified bearing system;
- Eliminating the whole electric-electronic control system of the electromagnetic bearings of the current models;
- Lowering the cost of the product;
- Making it a more competitive product;
- Making it a simpler product for large-scale manufacture, and
- Reducing the volume of the compressor.

These objectives are achieved by means of a fluid compressor comprising a pressurization chamber and at least one fluid pressurization device, the pressurization chamber and the pressurization device being inside a housing, the pressurization chamber having a non-pressurized inlet and a pressurized outlet, the pressurization device compressing the fluid collected by the non-pressurized inlet and discharging it through the pressurized outlet, the pressurization device having at least one aerostatic bearing, the aerostatic bearing comprising a floating pressurization region, the compressor comprising a compressed fluid accumulator fluidically connectable to the pressurized outlet and to the floating pressurization region, the compressed fluid accumulator being located inside the compressor housing.

The objectives of the present invention are further attained by a compressor control system that comprises a control circuit to control a fluid compressor as described above, comprising a first control valve and a second control valve that selectively connect either the compressed fluid accumulator to the pressurized outlet or the compressed fluid accumulator to the floating region of the aerostatic bearing, the system being configured to connect the compressed fluid accumulator to the pressurized outlet and the floating region of the aerostatic bearing when the compressor is operating, or only the compressed fluid accumulator and the floating region of the aerostatic bearing before the start of the compressor.

Still according to the teachings of the present invention, the objectives are further achieved by a method of starting a compressor that comprises the steps of: in the start mode, opening a passage from the compressed fluid accumulator during the time needed for an aerostatic bearing of the compressor to float; keeping the second control valve closed until the pressure of the pressurized outlet is higher than the pressure of the fluid discharged from the compressed fluid accumulator; recharging the compressed fluid accumulator from the fluid at the pressurized outlet.

### Brief Description of Drawings

The present invention will be described in more details on the basis of embodiments examples represented in the drawings. The drawings show:
Figure 1 - is a schematic cut view of a multiple-stage centrifugal compressor, illustrating one of the embodiments of the present invention;
Figure 2 - is a schematic cut view of a multiple-stage centrifugal compressor, illustrating one of the embodiments of the present invention;
Figure 3 - is a cut view of a linear compressor, according to another embodiment of the present invention.

### Detailed Description of Drawings

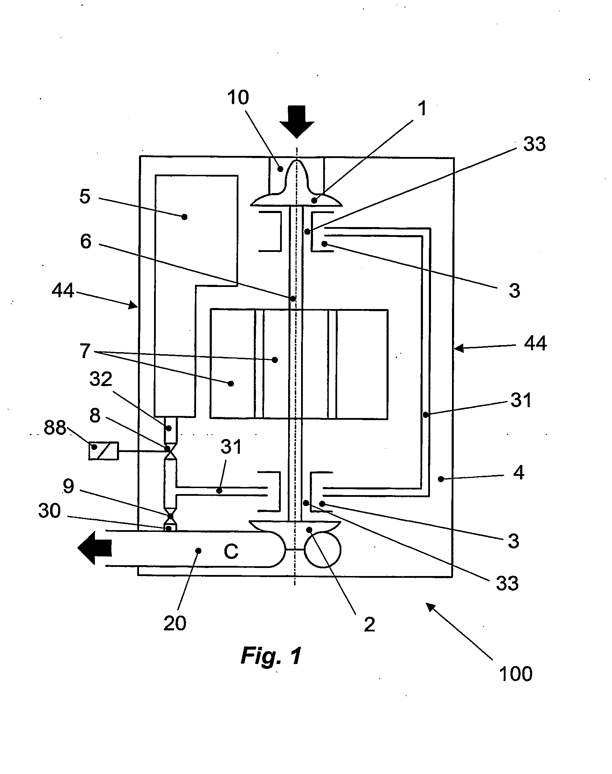

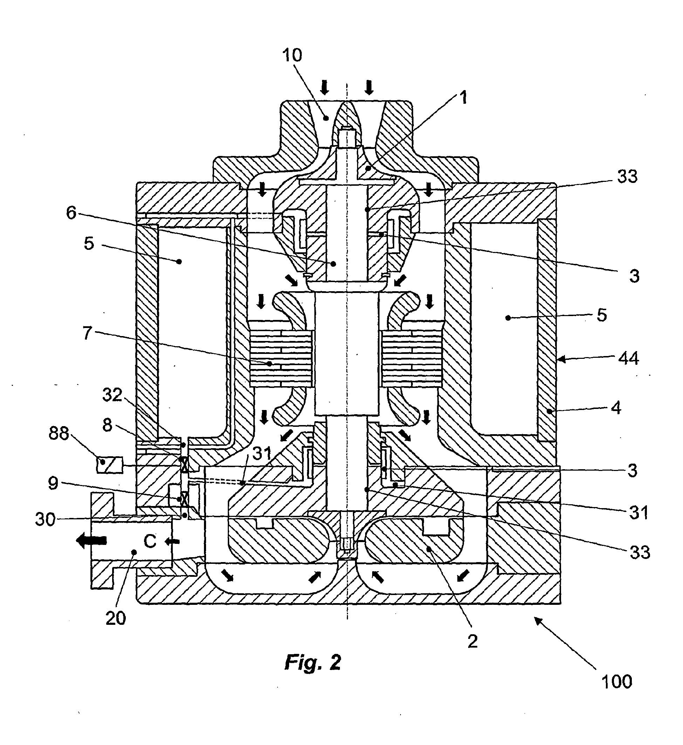

As can be seen in Figures 1 and 2, one of the possible embodiments of the teachings of the present invention is to apply them to a centrifugal compressor, for instance, of the two-stage type. This type of compressor has two stages, whose compression rotor 1, of the first stage, has the function of drawing a fluid (gas) through a non-pressurized inlet 10; in order to be pressurized then by a second-stage compression rotor 2 for the cooling circuit (not shown) from the pressurized outlet 20. The two compression rotors 1, 2 are associated, that is to say, they are mechanically fixed at the ends of a same shaft 6, which is, in turn, activated by an electric motor 7. Shaft 6 also has a pair of aerostatic bearings 3 in a floating pressurization region 33 which, when submitted to a positive pressure, start to float.

In addition, compressor 100 further consists of a housing 4, which comprises an external wall or closure walls 44 that make the compressor 100 hermetically closed.

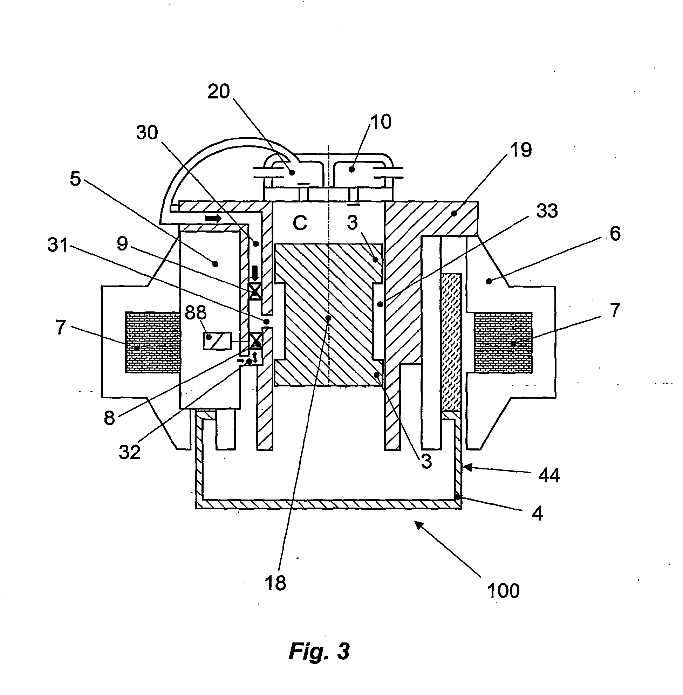

Another embodiment of the present invention is applicable to linear compressors and, in this case, the difference is related to the bearing system of the piston 18 itself, instead of a shaft 6 that is present in centrifugal compressors. As can be observed in more details in Figure 3, in a linear compressor, the pressurization device is a piston 18 positioned inside a cylinder 19, the piston 18 being displaceable inside the cylinder 19 by an electric motor 7 of the linear type, the piston 18 further resting on a pair of aerostatic bearings 3.

Generically, the same constructive concepts may be applied to centrifugal and linear compressors, since both have conceptually the same means of operation. In both cases, at least one pressurization chamber C is foreseen where the fluid will be compressed by at least one fluid pressurization device 1, 2, 18, that is to say, by one or more rotors 1, 2 or a piston 18, which, independently of the solution, will be located in a housing 4, the pressurization chamber C having a non-pressurized inlet 10 and a pressurized outlet 20, the fluid (gas) being collected by the non-pressurized inlet 10, compressed in the pressurization chamber C and discharged through the pressurized outlet 20.

For both the bearings in the centrifugal compressor and in the linear compressor to float, at least one aerostatic bearing 3 is provided, this aerostatic bearing 3 comprising a floating pressurization region 33 to where the fluid must be pumped for the bearing to float during the operation of the compressor 100.

According to the teachings of the present invention in order to overcome the constructive and operating problems in the art, a reservoir (or a compressed fluid accumulator 5) must be provided, which may be fluidically connected to the pressurized outlet 20 and to the floating pressurization region 33, so as to (i) make the aerostatic bearings 3 float during the operation of the compressor 100 and, at the same time, ii) feed the compressed fluid accumulator 5 with the pressure available at the pressured outlet 20.

In addition, so as to overcome the space, construction, maintenance and manufacturing problems of the prior art, the compressed fluid accumulator 5 must be located inside the housing 4 within the respective closure walls 44, so that it is formed as an integral part of the housing 4, which imparts not only less charge loss, but also a more immediate response in the recharge of the compressed fluid accumulator 5 and, therefore, more efficiency, and in the pressurization of the bearings 3.

With regard to the fluid connections between the compressed fluid accumulator 5, the pressurized outlet 20 and the floating pressurization region 33 of the aerostatic bearing 3, it is possible to observe from Figures 1 and 2 that the compressed fluid accumulator 5 is selectively connectable either to the pressurized outlet 20 or to the floating region 33 of aerostatic bearing 3. In this sense, it is possible to observe that the compressed fluid accumulator 5 is connectable to the floating region 33 of the aerostatic bearing 3 through an accumulator tube 32 and a bearing tube 31, the accumulator tube 32 being connected to the bearing tube 31 through a first control valve 8, the first control valve 8 being located in the accumulator tube 32. The connection of the compressed fluid accumulator 5 with the pressurized outlet 20 is made by the accumulator tube 32 and a collection tube 30, the accumulator tube 32 being connected to the collection tube 30 through the first control valve 8 and a second control valve 9, this second control valve 9 being located in the collection tube 30.

Operationally, the first control valve 8 enables the connection of the compressed fluid accumulator to the pressurized outlet 20 when the compressor 100 is operating, and the floating pressurization region 33 of the aerostatic bearing 3 is also connected to the pressurized outlet when the compressor 100 is operating, for the compressed fluid accumulator 5 to have the same pressure of the pressurized outlet 20 and, thus, remain charged.

With this configuration, before the start of the compressor 100, the compressed fluid accumulator 5 is connected to the floating pressurization region 33 of the aerostatic bearing 3, the second control valve 9 remaining closed to the passage of the fluid to the pressurized outlet 20, the compressor 100 only being started after the time needed for the aerostatic bearing 3 to float, which usually takes approximately one second.

With regard to the type of valve, preferably as a first control valve 8 an electric valve (or solenoid valve) is used that can be controlled by an external system, according to the teachings of the present invention, so as to release the fluid stored in the compressed fluid accumulator 5 at the start of the compressor 100, as well as to control the respective recharge during the operating phase of the compressor 100.

With regard to the second control valve 9, this is preferably the unidirectional mechanical valve that enables the passage of the fluid of the pressurized outlet 20 to the compressed fluid accumulator 5. This unidirectional valve aims at preventing the fluid that is stored in the compressed fluid accumulator 5 from exiting through the pressurized outlet 20 when the compressor 100 is at the starting phase and, at the same time, must be configured to be open to the passage of the pressurized fluid at the pressurized outlet 20 for recharging the compressor 100 when the latter is in operation. The second control valve 9 can also be replaced by an electric valve (or solenoid valve) that must be opened in the suitable moments to achieve the objectives of the present invention.

In order to control the compressor 100 of the present invention, an associated system is provided. The system must comprise an electronic control circuit 88 to control the starting phase of the compressor 100 as well as the charging phase of the compressed fluid accumulator 5. Therefore, as already mentioned, the control circuit 88 of the system of the present invention must selectively connect, by means of the first control valve 8 and the second control valve 9, either the compressed fluid accumulator 5 to pressurized outlet 20 or the compressed fluid accumulator 5 to the floating region 33 of the aerostatic bearing 3 and, specifically, it must be configured to connect the compressed fluid accumulator 5 to the pressurized outlet 20 and the floating region 33 of the aerostatic bearing 3 when compressor 100 is operation, or only the compressed fluid accumulator 5 and the floating region 33 of the aerostatic bearing 3 before the start of the compressor 100.

The system must further provide that, at the start of the compressor 100, the control circuit 88 opens the electric valve so that the compressed fluid stored inside the compressed fluid accumulator 5 is, at least partially, transferred to the floating pressurization region 33 of the aerostatic bearing 3 and the compressor 100 is started only after the time needed for the aerostatic bearing 3 to float, that is, typically within approximately one second after the opening of the compressed fluid accumulator 5. At this moment, the second control valve 9 will remain closed for the passage of the fluid to the pressurized outlet 20, until the pressure of the fluid of the pressurized outlet 20 is higher than the pressure of the fluid discharged from the compressed fluid accumulator 5.

By applying the operation of the system to the compressor 100, the following steps can be foreseen for the start of the compressor:
- in the start mode, opening a passage from the compressed fluid accumulator 5 during the time needed for the aerostatic bearings 3 of the compressor 100 to float; and
- keeping the second control valve 9 closed until the pressure of the pressurized outlet 20 is higher than the pressure of the fluid discharged from the compressed fluid accumulator 5; and
- recharging the compressed fluid accumulator 5 from the fluid at the pressurized outlet 20.

Preferably, the volume of the compressed fluid accumulator is configured to have about 10% of the total volume of the refrigerant fluid that circulates inside the cooling circuit, other volume percentages also being possible, depending on the conditions and characteristics of the compressor 100. In comparison with the systems according to the prior art, the advantages are significant, since not only a reduced size is achieved for the installation of the compressor 100 of the cooling system but also a reduced mounting time of the compressor 100 at a refrigerator cabinet is attained, for instance, because the compressed fluid accumulator 5 is already integrated into the housing 4, and, in addition, cost savings are achieved because the volume of the cooling fluid is smaller when compared to a system with a reservoir separated from the housing 4, which results in lower manufacturing and maintenance costs of the compressor 100.

After having described examples of the preferred embodiment, it must be understood that the scope of the present invention encompasses other possible variations, being limited only by the content of the appended claims, including therein the possible equivalents.

## Claims

1. A fluid compressor (100) comprising a pressurization chamber (C) and at least one fluid pressurization device (1, 2, 18),
the pressurization chamber (C) and the pressurization device (1, 2, 18) being located in a housing (4), the pressurization chamber (C) having a non-pressurized inlet (10) and a pressurized outlet (20), the pressurization device (1, 2, 18) compressing the fluid collected by the non-pressurized inlet (10) and discharging it through the pressurized outlet (20),
the pressurization device (1, 2, 18) having at least one aerostatic bearing (3), the aerostatic bearing (3) comprising a floating pressurization region (33),
the compressor being **characterized by**
comprising a compressed fluid accumulator (5) fluidically connectable to the pressurized outlet (20) and to the floating pressurization region (33), the compressed fluid accumulator (5) being located inside the housing (4) of the compressor (100) and being fed with the pressurized outlet (20) fluid.

2. A compressor according to claim 1, **characterized in that** the housing (4) is formed by closure walls (44) and **in that** the compressed fluid accumulator (5) is formed as an integral part of the housing (4) and is located internally to the closure walls (44).

3. A compressor according to claim 1 or 2, **characterized in that** the compressed fluid accumulator (5) is configured to be selectively connectable either to the pressurized outlet (20) or to the floating region (33) of the aerostatic bearing (3).

4. A compressor according to claim 1, 2 or 3, **characterized in that** the compressed fluid accumulator (5) is connectable to the floating region (33) of the aerostatic bearing (3) through an accumulator tube (32) and a bearing tube (31), the accumulator tube (32) being connected to the bearing tube (31) through a first control valve (8), the first control valve (8) being located in the accumulator tube (32).

5. A compressor according to claim 1, 2 or 3, **characterized in that** the compressed fluid accumulator (5) is connectable to the pressurized outlet (20) through an accumulator tube (32) and a collection piping (30), the accumulator piping (32) being connected to the collection piping (30) through the first control valve (8) and a second control valve (9), the second control valve (9) being located in the collection piping (30).

6. A compressor according to claim 4 or 5, **characterized in that** the first control valve (8) enables the connection of the compressed fluid accumulator (5) to the pressurized outlet (20) when the compressor (100) is operating.

7. A compressor according to claim 4 or 5, **characterized in that** the floating pressurization region (33) of the aerostatic bearing (3) is connected to the pressurized outlet (20) when the compressor is operating.

8. A compressor according to claim 4 or 5, **characterized in that** before the start of the compressor (100), the compressed fluid accumulator (5) is connected to the floating pressurization region (33) of the aerostatic bearing (3), the second control valve (9) remaining closed for the passage of the fluid to the pressurized outlet (20), the compressor (100) being started after the time needed for the aerostatic bearing (3) to float.

9. A compressor according to claim 6, 7 or 8, **characterized in that** the first control valve (8) is an electric valve controllable by a remote system.

10. A compressor according to claim 6, 7 or 8, **characterized in that** the second control valve (9) is an unidirectional valve that enables the passage of the fluid of the pressurized outlet (20) to the compressed fluid accumulator (5).

11. A compressor according to claim 10, **characterized in that** it is a centrifugal compressor wherein the pressurization device is a rotor (1, 2), the rotor (1, 2) being associated with a shaft (6), the shaft (6) having a pair of aerostatic bearings (3) in the floating pressurization region (33).

12. A compressor according to claim 11, **characterized in that** it is a linear compressor wherein the pressurization device is a piston (18) positioned inside a cylinder (19), the piston (18) being displaced inside the cylinder (19) and having a pair of aerostatic bearings (3).

13. A compressor control system comprising a control circuit (88) to control a fluid compressor (100) as claimed in claim 1, comprising a first control valve (8) and a second control valve (9) that selectively connect either the compressed fluid accumulator (5) to the pressurized outlet (20) or the compressed fluid accumulator (5) to the floating region (33) of the aerostatic bearing (3),
the system being configured to connect the compressed fluid accumulator (5) to the pressurized outlet (20) and the floating region (33) of the aerostatic bearing (3) when the compressor (100) is operating or
only the compressed fluid accumulator (5) and the floating region (33) of the aerostatic bearing (3) before the start of the compressor (100).

14. A system according to claim 13, **characterized in that** the first control valve (8) is an electric valve associated with a control circuit (88), the system being configured in such a way that the start of the compressor (100), the control circuit (88) opens the electric valve for transfer the compressed fluid stored inside the compressed fluid accumulator (5) to the floating pressurization region (33) of the aerostatic bearing (3), the compressor (100) being started after the time needed for the aerostatic bearing (3) to float.

15. A system according to claim 14, **characterized in that**, during the start of the compressor, the second control valve (9) remains closed for the passage of the fluid to the pressurized outlet (20), until the pressure of the fluid of the pressurized outlet (20) is higher than the pressure of the fluid discharged from the compressed fluid accumulator (5).

16. A method for starting a compressor as defined in claims 1-12, **characterized by** comprising the steps of:
in the start mode, opening a passage from the compressed fluid accumulator (5) during the time needed for the aerostatic bearing (3) of the compressor to float;
keeping the second control valve (9) closed until the pressure of the pressurized outlet (20) is higher than the pressure of the fluid discharged from the compressed fluid accumulator (5);
recharging the compressed fluid accumulator (5) from the fluid at the pressurized outlet (20).

## Patentansprüche

1. Fluidverdichter (100), umfassend eine Druckbeaufschlagungskammer (C) und wenigstens eine Flüssigkeit-Druckbeaufschlagungsvorrichtung (1, 2, 18),
wobei die Druckbeaufschlagungskammer (C) und die Druckbeaufschlagungsvorrichtung (1, 2, 18) in einem Gehäuse (4) angeordnet sind, wobei die Druckbeaufschlagungskammer (C) einen nicht-druckbeaufschlagten Einlass (10) und einen druckbeaufschlagten Auslass (20) aufweist, wobei die Druckbeaufschlagungsvorrichtung (1, 2, 18) das von dem nicht-druckbeaufschlagten Einlass (10) gesammelte Fluid verdichtet und es durch den druckbeaufschlagten Auslass (20) entlässt,
wobei die Druckbeaufschlagungsvorrichtung (1, 2, 18) wenigstens ein aerostatisches Lager (3) aufweist, wobei das aerostatische Lager (3) wenigstens einen schwimmenden Druckbeaufschlagungsbereich (33) umfasst,
wobei der Verdichter **gekennzeichnet ist durch**:
Umfassen eines Speichers (5) verdichteten Fluids, welcher fluidtechnisch mit dem druckbeaufschlagten Auslass (20) und mit dem schwimmenden Druckbeaufschlagungsbereich (33) verbindbar ist, wobei der Speicher (5) verdichteten Fluids innerhalb des Gehäuses (4) des Verdichters (100) angeordnet ist und ihm Fluid von dem druckbeaufschlagten Auslass (20) zugeführt wird.

2. Verdichter nach Anspruch 1, **dadurch gekennzeichnet, dass** das Gehäuse (4) durch Verschlusswände (44) gebildet ist, und dass der Speicher (5) verdichteten Fluids als ein integrales Teil des Gehäuses (4) gebildet ist und innen liegend zu den Verschlusswänden (44) angeordnet ist.

3. Verdichter nach Anspruch 1 oder 2, **dadurch gekennzeichnet, dass** der Speicher (5) verdichteten Fluids konfiguriert ist, um wahlweise entweder mit dem druckbeaufschlagten Auslass (20) oder mit dem schwimmenden Bereich (33) des aerostatischen Lagers (3) verbindbar zu sein.

4. Verdichter nach Anspruch 1, 2 oder 3, **dadurch gekennzeichnet, dass** der Speicher (5) verdichteten Fluids mit dem schwimmenden Bereich (33) des aerostatischen Lagers (3) durch eine Speicherröhre (32) und eine Lagerröhre (31) verbindbar ist, wobei die Speicherröhre (32) mit der Lagerröhre (31) durch ein erstes Regel-/Steuer-Ventil (8) verbunden ist, wobei das erste Regel-/Steuer-Ventil (8) in der Speicherröhre (32) angeordnet ist.

5. Verdichter nach Anspruch 1, 2 oder 3, **dadurch gekennzeichnet, dass** der Speicher (5) verdichteten Fluids mit dem druckbeaufschlagten Auslass (20) durch eine Speicherröhre (32) und eine Sammelrohrleitung (30) verbindbar ist, wobei die Speicherrohrleitung (32) mit der Sammelrohrleitung (30) durch ein erstes Steuer-/Regel-Ventil (8) und ein zweiten Steuer-/Regel-Ventil (9) verbunden ist, wobei das zweite Steuer-/Regel-Ventil (9) in der Sammelrohrleitung (30) angeordnet ist.

6. Verdichter nach Anspruch 4 oder 5, **dadurch gekennzeichnet, dass** das erste Regel-/Steuer-Ventil (8) die Verbindung des Speichers (5) verdichteten Fluids mit dem druckbeaufschlagten Auslass (20) ermöglicht, wenn der Verdichter (100) in Betrieb ist.

7. Verdichter nach Anspruch 4 oder 5, **dadurch gekennzeichnet, dass** der schwimmende Druckbeaufschlagungsbereich (33) des aerostatischen Lagers (3) mit dem druckbeaufschlagten Auslass (20) verbunden ist, wenn der Verdichter in Betrieb ist.

8. Verdichter nach Anspruch 4 oder 5, **dadurch gekennzeichnet, dass** vor dem Start des Verdichters (100) der Speicher (5) verdichteten Fluids mit dem schwimmenden Druckbeaufschlagungsbereich (33) des aerostatischen Lagers (3) verbunden ist, wobei das zweite Regel-/Steuer-Ventil (9) für den Durchtritt des Fluids zu dem druckbeaufschlagten Auslass (20) geschlossen bleibt, wobei der Verdichter (100) nach der Zeit gestartet wird, welche das aerostatische Lager (3) benötigt, um zu schwimmen.

9. Verdichter nach Anspruch 6, 7 oder 8, **dadurch gekennzeichnet, dass** das erste Regel-/Steuer-Ventil (8) ein elektrisches Ventil ist, welches durch ein Fernsystem regelbar/steuerbar ist.

10. Verdichter nach Anspruch 6, 7 oder 8, **dadurch gekennzeichnet, dass** das zweite Regel-/Steuer-Ventil (9) ein Rückschlagventil ist, welches den Durchtritt des Fluids von dem druckbeaufschlagten Auslass (20) zu dem Speicher (5) verdichteten Fluids ermöglicht.

11. Verdichter nach Anspruch 10, **dadurch gekennzeichnet, dass** er ein Zentrifugalverdichter ist, wobei die Druckbeaufschlagungsvorrichtung ein Rotor (1, 2) ist, wobei der Rotor (1, 2) einer Welle (6) zugeordnet ist, wobei die Welle (6) ein Paar von aerostatischen Lagern (3) in dem schwimmenden Druckbeaufschlagungsbereich (33) aufweist.

12. Verdichter nach Anspruch 11, **dadurch gekennzeichnet, dass** er ein Linearverdichter ist, wobei die Druckbeaufschlagungsvorrichtung ein Kolben (18) ist, welcher in einem Zylinder (19) angeordnet ist, wobei der Kolben (18) innerhalb des Zylinders (19) verlagert wird und ein Paar von aerostatischen Lagern (3) aufweist.

13. Verdichter-Regel-/Steuer-System, umfassend einen Regel-/Steuer-Kreis (88), um einen Fluidverdichter (100) nach Anspruch 1 zu regeln/steuern, umfassend ein erstes Regel-/Steuer-Ventil (8) und ein zweites Regel-/Steuer-Ventil (9), welche wahlweise entweder den Speicher (5) verdichteten Fluids mit dem druckbeaufschlagten Auslass (20) oder den Speicher (5) verdichteten Fluids mit dem schwimmenden Bereich (33) des aerostatischen Lagers (3) verbinden,
wobei das System konfiguriert ist, um den Speicher (5) verdichteten Fluids mit dem druckbeaufschlagten Auslass (20) und dem schwimmenden Bereich (33) des aerostatischen Lagers (3) zu verbinden, wenn der Verdichter (100) in Betrieb ist, oder
nur den Speicher (5) verdichteten Fluids und den schwimmenden Bereich (33) des aerostatischen Lagers (3) zu verbinden, vor dem Start des Verdichters (100).

14. System nach Anspruch 13, **dadurch gekennzeichnet, dass** das erste Regel-/Steuer-Ventil (8) ein elektrisches Ventil ist, welches in Verbindung mit einem Regel-/Steuer-Kreis (88) steht, wobei das System auf eine solche Weise konfiguriert ist, dass bei dem Start des Verdichters (100) der Regel-/Steuer-Kreis (88) das elektrische Ventil öffnet, zum Übertragen des verdichteten Fluids, welches innerhalb des Speichers (5) verdichteten Fluids gespeichert ist, zu dem schwimmenden Druckbeaufschlagungsbereich (33) des aerostatischen Lagers (3), wobei der Verdichter (100) nach der Zeit gestartet wird, welche das aerostatische Lager (3) benötigt, um zu schwimmen.

15. System nach Anspruch 14, **dadurch gekennzeichnet, dass** während des Starts des Verdichters das zweite Regel-/Steuer-Ventil (9) für den Durchtritt des Fluids zu dem druckbeaufschlagten Auslass (20) geschlossen bleibt, bis der Druck des Fluids des druckbeaufschlagten Auslasses (20) höher als der Druck des Fluids ist, welches von dem Speicher (5) verdichteten Fluids entlassen wird.

16. Verfahren zum Starten eines Verdichters wie in Ansprüchen 1-12 definiert, **dadurch gekennzeichnet, dass** es die folgenden Schritte umfasst:
- Öffnen in dem Startmodus eines Durchlasses von dem Speicher (5) verdichteten Fluids während der Zeit, die von dem aerostatischen Lager (3) des Verdichters benötigt wird, um zu schwimmen;
- geschlossen-Halten des zweiten Regel-/Steuer-Ventils (9) bis der Druck des druckbeaufschlagten Auslasses (20) höher als der Druck des Fluids ist, welches von dem Speicher (5) verdichteten Fluids entlassen wird;
- wieder-Aufladen des Speichers (5) verdichteten Fluids von dem Fluid an dem druckbeaufschlagten Auslass (20).

## Revendications

1. Compresseur de fluide (100) comprenant une chambre de pressurisation (C) et au moins un dispositif de pressurisation de fluide (1, 2, 18),
la chambre de pressurisation (C) et le dispositif de pressurisation (1, 2, 18) étant positionnés dans un boîtier (4), la chambre de pressurisation (C) ayant une entrée non pressurisée (10) et une sortie pressurisée (20), le dispositif de pressurisation (1, 2, 18) comprimant le fluide collecté par l'entrée non pressurisée (10) et le déchargeant par la sortie pressurisée (20),
le dispositif de pressurisation (1, 2, 18) ayant au moins un palier aérostatique (3), le palier aérostatique (3) comprenant une région de pressurisation flottante (33),
le compresseur étant **caractérisé en ce qu'**il comprend:
un accumulateur de fluide comprimé (5) pouvant être raccordé de manière fluide à la sortie pressurisée (20) et à la région de pressurisation flottante (33), l'accumulateur de fluide comprimé (5) étant positionné à l'intérieur du boîtier (4) du compresseur (100) et étant alimenté avec le fluide de la sortie pressurisée (20).

2. Compresseur selon la revendication 1, **caractérisé en ce que** le boîtier (4) est formé par des parois de fermeture (44) et **en ce que** l'accumulateur de fluide comprimé (5) est formé comme faisant partie intégrante du boîtier (4) et est positionné à l'intérieur des parois de fermeture (44).

3. Compresseur selon la revendication 1 ou 2, **caractérisé en ce que** l'accumulateur de fluide comprimé (5) est configuré pour pouvoir être sélectivement raccordé à la sortie pressurisée (20) ou à la région flottante (33) du palier aérostatique (3).

4. Compresseur selon la revendication 1, 2 ou 3, **caractérisé en ce que** l'accumulateur de fluide comprimé (5) peut être raccordé à la région flottante (33) du palier aérostatique (3) par un tube d'accumulateur (32) et un tube de palier (31), le tube d'accumulateur (32) étant raccordé au tube de palier (31) par une première soupape de commande (8), la première soupape de commande (8) étant positionnée dans le tube d'accumulateur (32).

5. Compresseur selon la revendication 1, 2 ou 3, **caractérisé en ce que** l'accumulateur de fluide comprimé (5) peut être raccordé à la sortie pressurisée (20) par un tube d'accumulateur (32) et un tuyau de collecte (30), le tuyau d'accumulateur (32) étant raccordé au tuyau de collecte (30) par la première soupape de commande (8) et une deuxième soupape de commande (9), la deuxième soupape de commande (9) étant positionnée dans le tuyau de collecte (30).

6. Compresseur selon la revendication 4 ou 5, **caractérisé en ce que** la première soupape de commande (8) permet le raccordement de l'accumulateur de fluide comprimé (5) à la sortie pressurisée (20) lorsque le compresseur (100) fonctionne.

7. Compresseur selon la revendication 4 ou 5, **caractérisé en ce que** la région de pressurisation flottante (33) du palier aérostatique (3) est raccordée à la sortie pressurisée (20) lorsque le compresseur fonctionne.

8. Compresseur selon la revendication 4 ou 5, **caractérisé en ce qu'**avant le démarrage du compresseur (100), l'accumulateur de fluide comprimé (5) est raccordé à la région de pressurisation flottante (33) du palier aérostatique (3), la deuxième soupape de commande (9) restant fermée pour le passage du fluide vers la sortie pressurisée (20), le compresseur (100) étant démarré après le temps nécessaire pour que le palier aérostatique (3) flotte.

9. Compresseur selon la revendication 6, 7 ou 8, **caractérisé en ce que** la première soupape de commande (8) est une soupape électrique pouvant être commandée par un système à distance.

10. Compresseur selon la revendication 6, 7 ou 8, **caractérisé en ce que** la deuxième soupape de commande (9) est une soupape unidirectionnelle qui permet le passage du fluide de la sortie pressurisée (20) vers l'accumulateur de fluide comprimé (5).

11. Compresseur selon la revendication 10, **caractérisé en ce qu'**il s'agit d'un compresseur centrifuge dans lequel le dispositif de pressurisation est un rotor (1, 2), le rotor (1, 2) étant associé à un arbre (6), l'arbre (6) ayant une paire de paliers aérostatiques (3) dans la région de pressurisation flottante (33).

12. Compresseur selon la revendication 11, **caractérisé en ce qu'**il s'agit d'un compresseur linéaire dans lequel le dispositif de pressurisation est un piston (18) positionné à l'intérieur d'un cylindre (19), le piston (18) étant déplacé à l'intérieur du cylindre (19) et ayant une paire de paliers aérostatiques (3).

13. Système de commande de compresseur comprenant un circuit de commande (88) pour commander un compresseur de fluide (100) selon la revendication 1, comprenant une première soupape de commande (8) et une deuxième soupape de commande (9) qui raccordent sélectivement l'accumulateur de fluide comprimé (5) à la sortie pressurisée (20) ou bien l'accumulateur de fluide comprimé (5) à la région flottante (33) du palier aérostatique (3),
le système étant configuré pour raccorder l'accumulateur de fluide comprimé (5) à la sortie pressurisée (20) et à la région flottante (33) du palier aérostatique (3) lorsque le compresseur (100) fonctionne ou bien
uniquement l'accumulateur de fluide comprimé (5) et la région flottante (33) du palier aérostatique (3) avant le démarrage du compresseur (100).

14. Système selon la revendication 13, **caractérisé en ce que** la première soupape de commande (8) est une soupape électrique associée à un circuit de commande (88), le système étant configuré de sorte qu'au démarrage du compresseur (100), le circuit de commande (88) ouvre la soupape électrique pour le transfert du fluide comprimé stocké à l'intérieur de l'accumulateur de fluide comprimé (5) dans la région de pressurisation flottante (33) du palier aérostatique (3), le compresseur (100) étant démarré après le temps nécessaire pour que palier aérostatique (3) flotte.

15. Système selon la revendication 14, **caractérisé en ce que**, pendant le démarrage du compresseur, la deuxième soupape de commande (9) reste fermée pour le passage du fluide vers la sortie pressurisée (20), jusqu' à ce que la pression du fluide de la sortie pressurisée (20) soit supérieure à la pression du fluide déchargé de l'accumulateur de fluide comprimé (5).

16. Procédé pour démarrer un compresseur selon les revendications 1 à 12, **caractérisé en ce qu'**il comprend les étapes consistant à :
en mode de démarrage, ouvrir un passage à partir de l'accumulateur de fluide comprimé (5) pendant le temps nécessaire pour que le palier aérostatique (3) du compresseur flotte ;
maintenir la deuxième soupape de commande (9) fermée jusqu' à ce que la pression de la sortie pressurisée (20) soit supérieure à la pression du fluide déchargé de l'accumulateur de fluide comprimé (5) ;
recharger l'accumulateur de fluide comprimé (5) avec le fluide à la sortie pressurisée (20).
